(19) **Europäisches Patentamt / European Patent Office / Office européen des brevets**

(11) **EP 4 564 886 A1**

(12) **EUROPEAN PATENT APPLICATION**
published in accordance with Art. 153(4) EPC

(43) Date of publication:
**04.06.2025 Bulletin 2025/23**

(21) Application number: **23851620.7**

(22) Date of filing: **29.07.2023**

(51) International Patent Classification (IPC):
**H04W 24/02** (2009.01)   **H04W 72/04** (2023.01)

(52) Cooperative Patent Classification (CPC):
**H04W 24/02; H04W 72/04**

(86) International application number:
**PCT/CN2023/110064**

(87) International publication number:
**WO 2024/032399 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.08.2022 CN 202210957933**

(71) Applicant: **Huawei Technologies Co., Ltd.**
**Shenzhen, Guangdong 518129 (CN)**

(72) Inventors:
• **ZHAO, Feiran**
**Shenzhen, Guangdong 518129 (CN)**

• **CHEN, Ying**
**Shenzhen, Guangdong 518129 (CN)**
• **ZHOU, Yue**
**Shenzhen, Guangdong 518129 (CN)**
• **KONG, Chuili**
**Shenzhen, Guangdong 518129 (CN)**
• **YANG, Ruonan**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **DATA SCHEDULING METHOD AND APPARATUS**

(57)   This application discloses a data scheduling method and an apparatus. The method includes: A network device sends first information, where the first information indicates a correspondence between a repeated transmission quantity M of an uplink transmission to be performed by a terminal device and an aggregated slot quantity; and the correspondence includes a first correspondence between the repeated transmission quantity M and T aggregated slot quantities, or the correspondence includes a correspondence between a plurality of first repeated transmission quantities and one aggregated slot quantity, where a sum of the plurality of first repeated transmission quantities is M. The terminal device receives the first information, and performs the uplink transmission based on the correspondence indicated by the first information. In embodiments of this application, a transport block processing over multiple slots technology is more flexibly combined with a repetition technology, so that a transmission opportunity can be more fully used by a repeated transmission, to improve a coverage enhancement effect.

FIG. 4A

## Description

This application claims priority to Chinese Patent Application No. 202210957933.4, filed with the China National Intellectual Property Administration on August 10, 2022 and entitled "DATA SCHEDULING METHOD AND APPARATUS", which is incorporated herein by reference in its entirety.

## TECHNICAL FIELD

This application relates to the field of wireless communication technologies, and in particular, to a data scheduling method and an apparatus.

## BACKGROUND

A non-terrestrial network (non-terrestrial network, NTN) in which communication devices such as satellites and high-altitude platforms (high-altitude platforms, HAPS) participate in a network deployment technology and a 5th generation (5th generation, 5G) communication system are integrated with mutual complementarity to form a globally seamless space-air-ground-sea integrated communication network that meets a plurality of service requirements of users in various respects. This is an important direction of future communication development.

Round trip time (round trip time, RTT) in an NTN scenario is far greater than that in a terrestrial cellular system, and therefore a link budget of a cell edge user is poor. With increase of an orbit altitude, a link budget is significantly poor in an edge cell (or a beam) of a ground area covered by a satellite. In addition, in a scenario in which a mobile phone terminal is directly connected to the satellite, because a transmit power of the mobile phone terminal is small and a quantity of antennas is small, there is a bottleneck in decoding of a plurality of physical layer transmission channels in the NTN scenario. Especially in an uplink transmission scenario, a requirement for coverage enhancement needs to be urgently met.

## SUMMARY

Embodiments of this application provide a data scheduling method and an apparatus, to improve a coverage enhancement effect.

According to a first aspect, a data scheduling method is provided, where the method includes: obtaining first information, where the first information indicates a correspondence between a repeated transmission quantity M of an uplink transmission to be performed by a terminal device and an aggregated slot quantity, and the aggregated slot quantity is an aggregated slot quantity in transport block processing over multiple slots TBoMS; and the correspondence includes a first correspondence between the repeated transmission quantity M and T aggregated slot quantities, or the correspondence includes a correspondence between a plurality of first repeated transmission quantities and one aggregated slot quantity, where a sum of the plurality of first repeated transmission quantities is M, M is an integer greater than or equal to 1, and T is an integer greater than or equal to 1 and less than or equal to M; and performing the uplink transmission based on the correspondence.

According to a second aspect, a data scheduling method is provided, where the method includes: sending first information, where the first information indicates a correspondence between a repeated transmission quantity M of an uplink transmission to be performed by a terminal device and an aggregated slot quantity, and the aggregated slot quantity is an aggregated slot quantity in transport block processing over multiple slots TBoMS; and the correspondence includes a first correspondence between the repeated transmission quantity M and T aggregated slot quantities, or the correspondence includes a correspondence between a plurality of first repeated transmission quantities and one aggregated slot quantity, where a sum of the plurality of first repeated transmission quantities is M, M is an integer greater than or equal to 1, and T is an integer greater than or equal to 1 and less than or equal to M; and receiving uplink transmission data, where the uplink transmission data is sent based on the correspondence.

It can be learned that in embodiments of this application, a plurality of aggregated slot quantities corresponding to the repeated transmission quantity M are indicated, or one aggregated slot quantity corresponding to each of the plurality of first repeated transmission quantities is indicated, where the sum of the plurality of first repeated transmission quantities is M, so that a TBoMS technology and a repetition technology can be combined more flexibly, and therefore a transmission opportunity can be more fully used in the uplink transmission, to improve a coverage enhancement effect.

With reference to the first aspect, in a possible design, before the obtaining first information, the method further includes: receiving second information, where a correspondence between a repeated transmission quantity and an aggregated slot quantity set is configured in the second information, the first information indicates a first correspondence between the repeated transmission quantity M and a first aggregated slot quantity set in the second information, and a quantity of elements in the first aggregated slot quantity set is T; or a correspondence between a repeated transmission quantity and an aggregated slot quantity is configured in the second information, and the first information indicates a correspondence between each of the plurality of first repeated transmission quantities and the aggregated slot quantity in the second information.

With reference to the second aspect, in a possible design, before the obtaining first information, the method further includes: sending first information, where the first information indicates the correspondence between the repeated transmission quantity M of the uplink transmission to be performed by the terminal device and the aggregated slot quantity in the transport block processing over multiple slots TBoMS; and the correspondence is the first correspondence between the repeated transmission quantity M and the T aggregated slot quantities, or the correspondence is the correspondence between the plurality of first repeated transmission quantities and one aggregated slot quantity in the TBoMS, where the sum of the plurality of first repeated transmission quantities is M, M is an integer greater than or equal to 1, and T is an integer greater than or equal to 1 and less than or equal to M; and receiving the uplink transmission data, where the uplink transmission data is sent based on the correspondence.

In embodiments of this application, the correspondence between the repeated transmission quantity and the aggregated slot quantity is configured by using the second information. Then, when the network device indicates the terminal device to perform M repeated transmissions, the correspondence that is between the repeated transmission quantity M and the aggregated slot quantity and that is configured in the second information is indicated by using the first information. This can reduce resource overheads for indication information, and improve communication efficiency.

With reference to the first aspect or the second aspect, in a possible design, duration that is occupied by the uplink transmission and that is determined based on the correspondence is determined based on an uplink data transmission interval.

In embodiments of this application, the indicated correspondence meets this constraint condition, so that it can be ensured that the uplink transmission can be completed within the uplink data transmission interval, and as many transmission intervals (transmission opportunities) as possible are occupied based on a requirement, to improve a coverage enhancement effect.

With reference to the first aspect or the second aspect, in a possible design, the duration that is occupied by the uplink transmission and that is determined based on the correspondence is first duration, and the first duration is greater than 16 milliseconds.

With reference to the first aspect or the second aspect, in a possible design, the first duration is 20 milliseconds.

In embodiments of this application, a VoIP service scenario is used as an example, and a transmission time interval in the VoIP service is 20 milliseconds. However, a repetition technology and a TBoMS technology indicated in an existing protocol are combined causing only a maximum transmission opportunity of 16 milliseconds to be occupied (when the aggregated slot quantity in the TBoMS is 1, no effect by combining the two technologies is achieved) based on related parameters. The first duration determined based on the correspondence in embodiments of this application is greater than 16 milliseconds, so that a better coverage enhancement effect is achieved.

With reference to the first aspect or the second aspect, in a possible design, a maximum quantity of slots available to the uplink transmission is a first quantity of slots, a slot that is occupied by the uplink transmission and that is determined based on the correspondence is a second quantity of slots, and the second quantity of slots is less than or equal to the first quantity of slots.

In embodiments of this application, the correspondence indicated by the first information should meet a constraint condition of the maximum quantity of slots available to the uplink transmission, to avoid a coding error.

With reference to the first aspect or the second aspect, in a possible design, the first quantity of slots is 32.

With reference to the first aspect or the second aspect, in a possible design, a value of the aggregated slot quantity belongs to a first set, and the first set includes 5.

With reference to the first aspect or the second aspect, in a possible design, a value of M belongs to a second set, and the second set includes 5 and/or 10.

With reference to the first aspect or the second aspect, in a possible design, T=1 when the second set includes 5 and/or 10.

In embodiments of this application, the first duration is 20 milliseconds. A VoIP service scenario is used as an example. A transmission time interval in the VoIP service scenario is 20 milliseconds. In other words, the duration that is occupied by the uplink transmission and that is determined based on the correspondence is equal to the transmission time interval, and the uplink transmission completely occupies the transmission time interval. Therefore, coverage enhancement can be performed by fully using transmission opportunity, and a coverage enhancement effect can be fully improved.

With reference to the first aspect or the second aspect, in a possible design, when a subcarrier spacing is 15 kHz, the first correspondence exists between the repeated transmission quantity M being 4 and the aggregated slot quantity being 5.

With reference to the first aspect or the second aspect, in a possible design, when a subcarrier spacing is 15 kHz, the first correspondence exists between the repeated transmission quantity M being 10 and the aggregated slot quantity being 2; and/or the first correspondence exists between the repeated transmission quantity M being 5 and the aggregated slot quantity being 4.

In embodiments of this application, the foregoing three specified first correspondences can all meet a setting that the first duration is 20 milliseconds, and a type (T=1) of the aggregated slot quantity corresponding to the repeated transmission quantity M does not need to be increased, while only a value set of the repeated transmission quantity M and/or a value set of the aggregated slot quantity in the TBoMS need/needs to be increased, so that the uplink transmission can completely occupy the transmission time interval, complexity of and signaling overheads for the correspondence in the first information are reduced, the coverage enhancement can be performed by fully using the transmission opportunity, and the coverage enhancement effect can be fully improved.

With reference to the first aspect or the second aspect, in a possible design, the second information is radio resource control RRC signaling or a system information block SIB; and/or the first information is carried in downlink control information DCI or RRC signaling.

In embodiments of this application, the correspondence between the repeated transmission quantity and the aggregated slot quantity in the TBoMS is configured by using the RRC signaling or the SIB, and then the correspondence between the repeated transmission quantity M and the aggregated slot quantity set is indicated by using the DCI. Therefore, configuration information can be applied to an entire communication process by using the RRC signaling or the SIB, and indication information can be updated each time the DCI is delivered, to improve flexibility of indicating the correspondence. If the correspondence is indicated by using the RRC signaling, a change to the DCI can be reduced, and complexity of blind detection performed by the terminal device can be reduced.

With reference to the first aspect or the second aspect, in a possible design, the first information is carried in RRC signaling, the RRC signaling includes a first correspondence between the repeated transmission quantity M and an aggregated slot quantity set, and a quantity of non-repeated elements in the aggregated slot quantity set is T; or the RRC signaling includes a correspondence between each of the plurality of first repeated transmission quantities and one aggregated slot quantity.

In embodiments of this application, the correspondence between the repeated transmission quantity M and the aggregated slot quantity is directly indicated by using the RRC signaling, to reduce resource overheads that may be caused in a process of delivering a large amount of configuration information.

With reference to the first aspect or the second aspect, in a possible design, if the correspondence includes the correspondence between the plurality of first repeated transmission quantities and one aggregated slot quantity, in the uplink transmission, a repeated transmission corresponding to each first repeated transmission quantity is independently coded.

In embodiments of this application, in an uplink transmission process, independent coding is performed on a repeated transmission of each of the plurality of first repeated transmission quantities, so that decoding complexity at a receive end can be reduced, decoding efficiency can be improved, and data transmission efficiency can be improved.

With reference to the first aspect or the second aspect, in a possible design, when T=M, M repeated transmissions are in one-to-one correspondence with the T aggregated slot quantities; and/or when 1<T<M, the T aggregated slot quantities cyclically correspond to the M repeated transmissions.

According to a third aspect, a communication apparatus is provided. The communication apparatus includes a module or a unit configured to implement the method according to any one of the first aspect or the possible designs of the first aspect. The module or the unit may be a hardware circuit, may be software, or may be implemented by the hardware circuit in combination with the software. The communication apparatus may be a terminal device, or may be an apparatus (for example, a chip, a chip system, or a circuit) in the terminal device or an apparatus that can be used together with the terminal device. The apparatus may include:

a transceiver module, configured to: obtain first information, where the first information indicates a correspondence between a repeated transmission quantity M of an uplink transmission to be performed by a terminal device and an aggregated slot quantity, and the aggregated slot quantity is an aggregated slot quantity in transport block processing over multiple slots TBoMS; and the correspondence includes a first correspondence between the repeated transmission quantity M and T aggregated slot quantities, or the correspondence includes a correspondence between a plurality of first repeated transmission quantities and one aggregated slot quantity, where a sum of the plurality of first repeated transmission quantities is M, M is an integer greater than or equal to 1, and T is an integer greater than or equal to 1 and less than or equal to M; and perform the uplink transmission based on the correspondence.

With reference to the third aspect, in a possible design, the transceiver module is further configured to: before the obtaining first information, receive second information, where a correspondence between a repeated transmission quantity and an aggregated slot quantity set is configured in the second information, the first information indicates a first correspondence between the repeated transmission quantity M and a first aggregated slot quantity set in the second information, and a quantity of elements in the first aggregated slot quantity set is T; or a correspondence between a repeated transmission quantity and an aggregated slot quantity is configured in the second information, and the first information indicates a correspondence between each of the plurality of first repeated transmission quantities and the aggregated slot quantity in the second information.

According to a fourth aspect, a communication apparatus is provided. The communication apparatus includes a module or a unit configured to implement the method according to any one of the second aspect or the possible designs of the second aspect. The module or the unit may be a hardware circuit, may be software, or may be implemented by the hardware circuit in combination with the software. The communication apparatus may be a network device, or may be an apparatus (for example, a chip, a chip system, or a circuit) in the network device or an apparatus that can be used together with the network device. The apparatus may include:

a transceiver module, configured to: send first information, where the first information indicates a correspondence between a repeated transmission quantity M of an uplink transmission to be performed by a terminal device and an aggregated slot quantity, and the aggregated slot quantity is an aggregated slot quantity in transport block processing over multiple slots TBoMS; and the correspondence includes a first correspondence between the repeated transmission quantity M and T aggregated slot quantities, or the correspondence includes a correspondence between a plurality of first repeated transmission quantities and one aggregated slot quantity, where a sum of the plurality of first repeated transmission quantities is M, M is an integer greater than or equal to 1, and T is an integer greater than or equal to 1 and less than or equal to M; and receive uplink transmission data, where the uplink transmission data is sent based on the correspondence.

With reference to the fourth aspect, in a possible design, the transceiver module is further configured to: send second information, where a correspondence between a repeated transmission quantity and an aggregated slot quantity set is configured in the second information, the first information indicates a first correspondence between the repeated transmission quantity M and a first aggregated slot quantity set in the second information, and a quantity of elements in the first aggregated slot quantity set is T; or a correspondence between a repeated transmission quantity and an aggregated slot quantity is configured in the second information and the first information indicates a correspondence between each of the plurality of first repeated transmission quantities and the aggregated slot quantity in the second information.

With reference to the third aspect or the fourth aspect, there may be the following possible designs:

In a possible design, duration that is occupied by the uplink transmission and that is determined based on the correspondence is determined based on an uplink data transmission interval.

In a possible design, duration that is occupied by the uplink transmission and that is determined based on the correspondence is first duration, and the first duration is greater than 16 milliseconds.

In a possible design, the first duration is 20 milliseconds.

In a possible design, a maximum quantity of slots available to uplink transmission is a first quantity of slots, a slot that is occupied by the uplink transmission that is determined based on the correspondence is a second quantity of slots, and the second quantity of slots is less than or equal to the first quantity of slots.

In a possible design, the first quantity of slots is 32.

In a possible design, a value of the aggregated slot quantity belongs to a first set, and the first set includes 5.

In a possible design, a value of M belongs to a second set, and the second set includes 5 and/or 10.

In a possible design, T=1 when the second set includes 5 and/or 10.

In a possible design, when a subcarrier spacing CSC is 15 kHz, the first correspondence exists between the repeated transmission quantity M being 4 and the aggregated slot quantity being 5.

In a possible design, when a CSC is 15 kHz, the first correspondence exists between the repeated transmission quantity M being 10 and the aggregated slot quantity being 2; and/or the first correspondence exists between the repeated transmission quantity M being 5 and the aggregated slot quantity being 4. In a possible design, the second information is radio resource control RRC signaling or a system information block SIB; and/or the first information is carried in downlink control information DCI or RRC signaling.

In a possible design, the first information is carried in RRC signaling, the RRC signaling includes a first correspondence between the repeated transmission quantity M and the aggregated slot quantity set, and a quantity of non-repeated elements in the aggregated slot quantity set is T; or the RRC signaling includes a correspondence between each of the plurality of first repeated transmission quantities and one aggregated slot quantity.

In a possible design, if the correspondence is the correspondence between the plurality of first repeated transmission quantities and one aggregated slot quantity, in the uplink transmission, a repeated transmission corresponding to each first repeated transmission quantity is independently coded.

In a possible design, when T=M, M repeated transmissions are in one-to-one correspondence with the T aggregated slot quantities; and/or when 1<T<M, the T aggregated slot quantities cyclically correspond to the M repeated transmissions.

According to a fifth aspect, a communication apparatus is provided, including a processor, where the processor is configured to perform, by executing computer instructions or by using a logic circuit, the method according to any one of the first aspect or the possible designs of the first aspect.

In a possible design, the communication apparatus includes a memory, configured to store the computer instructions. Optionally, the memory and the processor are integrated together.

In a possible design, the communication apparatus further includes a transceiver. The transceiver is configured to receive a signal and/or send a signal, and the signal may carry signaling or data.

The communication apparatus is a terminal device or an apparatus in a terminal device.

According to a sixth aspect, a communication apparatus is provided, including a processor, where the processor is configured to perform, by executing computer instructions or by using a logic circuit, the method according to any one of the second aspect or the possible designs of the second aspect.

In a possible design, the communication apparatus includes a memory, configured to store the computer instructions. Optionally, the memory and the processor are integrated together.

In a possible design, the communication apparatus further includes a transceiver. The transceiver is configured to receive a signal and/or send a signal, and the signal may carry signaling or data.

The communication apparatus is a network device or an apparatus in a network device.

According to a seventh aspect, an embodiment of this application provides a chip system, including a processor. The processor is coupled to a memory, and the memory is configured to store a program or instructions. When the program or the instructions are executed by the processor, the chip system is enabled to implement the method according to any one of the first aspect or the second aspect.

Optionally, the chip system further includes an interface circuit, and the interface circuit is configured to exchange computer instructions to the processor.

Optionally, there may be one or more processors in the chip system, and the processor may be implemented by hardware or software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

According to an eighth aspect, an embodiment of this application provides a computer-readable storage medium. The computer-readable storage medium stores a computer program or instructions. When the computer program or the instructions are executed, a computer is enabled to perform the method according to any one of the first aspect or the second aspect.

According to a ninth aspect, an embodiment of this application provides a computer program product. When a computer reads and executes the computer program product, the computer is enabled to perform the method according to any one of the possible implementations of the first aspect or the second aspect.

According to a tenth aspect, an embodiment of this application provides a communication system. The communication system includes the apparatus according to the third aspect and/or the fourth aspect.

BRIEF DESCRIPTION OF DRAWINGS

To describe technical solutions of embodiments of this application more clearly, the following briefly describes the accompanying drawings for describing embodiments.

FIG. 1 is a diagram of an architecture of a communication system according to an embodiment of this application;

FIG. 2 is a diagram of a redundancy version RV according to an embodiment of this application;

FIG. 3A is a diagram of indication signaling for a repeated transmission quantity and an aggregated slot quantity according to an embodiment of this application;

FIG. 3B is a diagram of performance achieved by combining a repetition technology and a TBoMS technology according to an embodiment of this application;

FIG. 4A is a diagram of a data scheduling method according to an embodiment of this application;

FIG. 4B is a diagram of a first correspondence according to an embodiment of this application;

FIG. 4C is a diagram of a correspondence between a repeated transmission quantity and an aggregated slot quantity set according to an embodiment of this application;

FIG. 4D is a diagram of an RV application according to an embodiment of this application;

FIG. 4E is a diagram of another RV application according to an embodiment of this application;

FIG. 5A is a flowchart of a data scheduling method according to an embodiment of this application;

FIG. 5B is a diagram of a correspondence between a first repeated transmission quantity and an aggregated slot quantity according to an embodiment of this application;

FIG. 5C is a diagram of independent encoding according to an embodiment of this application;

FIG. 6 is a block diagram of a structure of a communication apparatus according to an embodiment of this application; and

FIG. 7 is a diagram of a hardware structure of a communication apparatus according to an embodiment of this application.

## DESCRIPTION OF EMBODIMENTS

In the specification, claims, and accompanying drawings of this application, the terms "first", "second", "third", "fourth" and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in the specification indicates that a particular feature, structure, or characteristic described with reference to this embodiment may be included in at least one embodiment of this application. The term shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

"A plurality of" refers to two or more. The term "and/or", describes an association relationship between associated objects and indicates that three relationships may exist. For example, A and/or B may indicate the following three cases: Only A exists, both A and B exist, and only B exists. The character "/" generally indicates an "or" relationship between the associated objects.

With development and evolution of 5G new radio (new radio, NR), requirements of various application scenarios, such as enhanced mobile broadband (enhanced mobile broadband, eMBB), massive machine-type communications (massive machine-type communications, MMTC), and ultra-reliable low-latency communication (ultra-reliable low-latency communication, uRLLC), gradually penetrate into various levels of a terrestrial network (terrestrial Network, TN). However, a vision of connecting everything is still limited by some special communication scenarios. For example, a conventional terrestrial base station cannot provide network coverage for regions such as deserts, forests, and oceans or high-speed moving vehicles such as airplanes and high-speed railways due to limitations by costs or physical conditions. Therefore, an NTN technology in a 5G network emerges. Compared with a conventional terrestrial communication network, an NTN uses a typical communication device, for example, a satellite or a HAPS, to participate in a network deployment technology, to actually implement global network coverage. Advantages and development strategy importance of the NTN are self-evident. A satellite communication system and 5G are integrated with mutual complementarity to form a globally seamless space-air-ground-sea integrated communication network that meets a plurality of service requirements of users in various respects. This is an important direction of future communication development.

For an NTN scenario, a coverage enhancement technology is an important topic for discussion. RTT in an NTN scenario is far greater than that in a terrestrial cellular system, and therefore a link budget of a cell edge user is poor. Especially in scenarios, such as a geostationary earth orbit (geostationary earth orbit, GEO), a medium earth orbit (medium earth orbit, MEO), and a low earth orbit (low earth orbit, LEO)-1200, in which an orbit altitude is high, a link budget is significantly poor in an edge cell (or a beam) of a ground area covered by a satellite. In addition, considering a scenario in which a mobile phone terminal is directly connected to the satellite, because a transmit power of the mobile phone terminal is small and a quantity of antennas is small, there is a bottleneck in decoding of a plurality of physical layer transmission channels in the NTN scenario. Especially, in an uplink transmission scenario, for example, a physical uplink shared channel (physical uplink shared channel, PUSCH), a physical uplink control channel (physical uplink control channel, PUCCH) message (Msg) 3, and control channels such as a PUCCH and a physical downlink control channel (physical uplink control channel, PDCCH), a requirement for coverage enhancement needs to be urgently met.

In embodiments of this application, a solution is provided for the coverage enhancement technology in the NTN scenario.

First, a system architecture and terms in embodiments of this application are described with reference to figures.

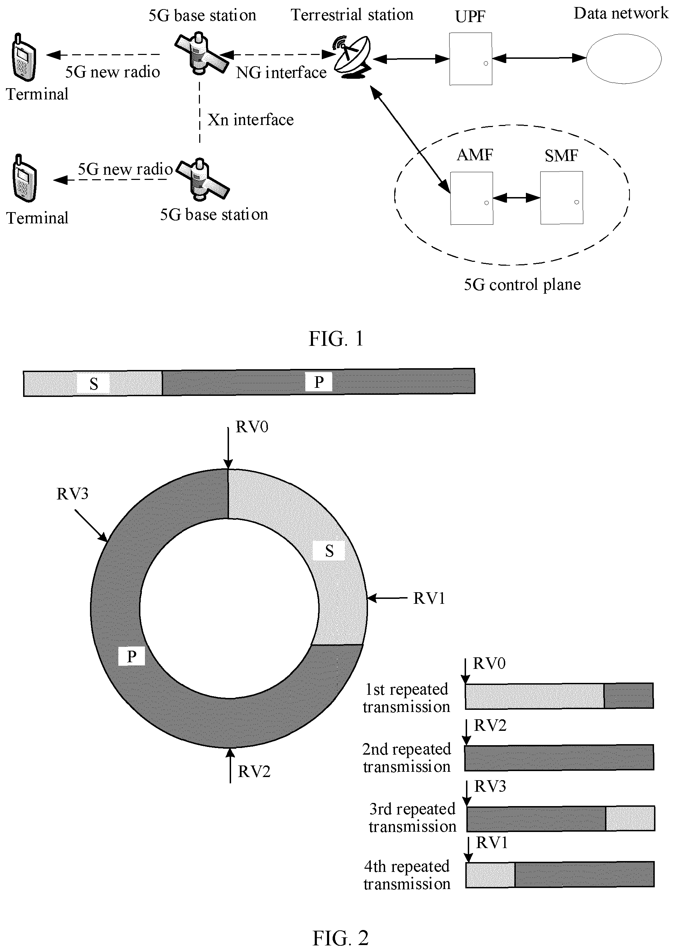

FIG. 1 is a diagram of an architecture of a communication system according to an embodiment of this application. As shown in FIG. 1, in a communication network in which NR and an NTN are integrated, a terrestrial mobile terminal accesses the network through 5G NR, and a 5G base station is deployed on a satellite and is connected to a terrestrial core network through a radio link. In addition, there is a radio link between satellites, to perform signaling exchange and user data transmission between base stations. All network elements in FIG. 1 and interfaces of the network elements are described as follows:

The terminal is a mobile device that supports 5G NR, and may be specifically user equipment (user equipment, UE), an access terminal, a subscriber unit (subscriber unit), a subscriber station, a mobile station (mobile station), customer-premises equipment (customer-premises equipment, CPE), a remote station, a remote terminal, a mobile device, a user terminal, a wireless communication device, a user agent, or a user apparatus. Alternatively, the terminal device may be a satellite phone, a cellular phone, a smartphone, a wireless data card, a wireless modem, a machine type communication device, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a vehiclemounted device, a communication device carried on high-altitude aircraft, a wearable device, an uncrewed aerial vehicle, a robot, a point of sale (point of sale, POS) machine, a terminal in device-to-device (device-to-device, D2D) communication, a terminal in vehicle to everything (vehicle to everything, V2X), a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. This is not limited in this application.

In embodiments of this application, an apparatus configured to implement a function of the terminal device may be a terminal device, or may be an apparatus, for example, a chip system, that can support the terminal device in implementing the function. The apparatus may be mounted in the terminal device or used in collaboration with the terminal device. In embodiments of this application, the chip system may include a chip, or may include a chip and another discrete component.

The 5G base station is a radio access network (radio access network, RAN) node (or device), in a 5G network, that connects the terminal to a wireless network, and may also be referred to as an access network device, a network device, or a next generation NodeB (gNB). The 5G base station mainly provides a wireless access service, schedules radio resources for the accessing terminal, provides a reliable wireless transmission protocol and data encryption protocol, and so on. The network device may be a node in a radio access network, and may be referred to as a base station, or may be referred to as a RAN node (or device). The network device may be an evolved NodeB (evolved NodeB, eNB or eNodeB) in LTE, a next generation NodeB (next generation NodeB, gNB) in a 5G network, a base station in a future evolved public land mobile network (public land mobile network, PLMN), a broadband network gateway (broadband network gateway, BNG), an aggregation switch, a non-3rd generation partnership project (3rd generation partnership project, 3GPP) access device, or the like. Optionally, the network device in embodiments of this application may include various forms of base stations, such as a macro base station, a micro base station (also referred to as a small station), a relay station, an access point, a device that implements a function of a base station in a communication system that evolves after 5G, a transmission reception point (transmission reception point, TRP), a transmission point (transmission point, TP), a mobile switching center, and a device that performs a function of a base station in device-to-device (Device-to-Device, D2D), vehicle-to-everything (vehicle-to-everything, V2X), and machine-to-machine (machine-to-machine, M2M) communication, and may also include a central unit (central unit, CU) and a distributed unit (distributed unit, DU) in a cloud radio access network (cloud radio access network, C-RAN) system, and a network device in an NTN communication system, that is, the device can be deployed on a high-altitude platform or a satellite. This is not specifically limited in embodiments of this application.

A 5G core network is a device, in the core network (core network, CN), that provides service support for the terminal device in the 5G network. The 5G core network is for user access control, mobility management, session management, user security authentication, charging, and other services. The 5G core network includes a plurality of function units that may be classified into a control plane functional entity and a data plane functional entity. An authentication management function (authentication management function, AMF) is responsible for user access management, security authentication, and mobility management. A user plane function (user plane function, UPF) is responsible for management of user plane data transmission, traffic statistics, and other functions.

A terrestrial station is responsible for forwarding signaling and service data between a satellite base station and the 5G core network.

5G NR is a radio link between the terminal and the base station.

An Xn interface is an interface between the 5G base station and a base station, and is for signaling exchange such as handover.

An NG interface is an interface between the 5G base station and the 5G core network, and is mainly for exchanging non-access-stratum (non-access-stratum, NAS) signaling and other signaling of the core network and service data of a user.

Coverage enhancement technology: A physical layer coverage enhancement technology includes but is not limited to a repetition (repetition) technology, a transport block processing over multiple slots (transport block processing over multiple slots, TBoMS) technology, a joint channel estimation technology, a frequency hopping technology, an antenna selection technology, and another technology. In the repetition technology and TBoMS technology that are two enhancement methods having significant gains and clear technical means, a transmission rate and a bit rate are reduced, so that a receiver obtains an energy gain and a coding gain during combined decoding to effectively reduce a link decoding threshold, to achieve a coverage enhancement effect.

Repetition technology: The repetition technology is a widely applied physical-layer transmission method (applicable to various physical channels) in a ground coverage enhancement technology, where a transmission rate is reduced (this is equivalent to reducing a bit rate) to continuously send a same transport block (transport block, TB), so that a combined energy gain of a plurality of segments of transmissions can be obtained at a receive end. Depending on whether redundancy versions (redundancy versions, RVs) of coded information sent in repetitions are the same, a combining manner of the repetition technology may be classified into two types at the receive end: Chase combining (Chase combining, CC) and incremental redundancy (incremental redundancy, IR) combining. In comparison with an energy gain brought by repeated sending and obtained at the receive end through the CC combining, an additional coding gain brought by combining different RVs may be further obtained through the IR combining, to reduce a decoding threshold.

Transport block processing over multiple slots technology: The TBoMS technology is a coverage enhancement technology that is provided for PUSCH coverage enhancement in ground coverage enhancement and in which a coding length is increased, coding header (header) overheads are reduced, and transmission is performed at a low bit rate to obtain a coding gain. A main feature of this technology is that an aggregated slot quantity N is added as a TBS scaling coefficient in a transport block size (transport block size, TBS) calculation procedure. In comparison with a conventional TBS calculation procedure, based on this modification, a coded bit version of one TBS may be communicated in N consecutive slots, while in a standard, a coded bit version of one TBS may be communicated in one slot.

Redundancy version: The RV is for dividing, into a plurality of groups, redundancy bits generated by an encoder. Each RV defines one transmission start point. Different RVs are for an initial transmission and hybrid automatic repeat requests (hybrid automatic repeat requests, HARQs), to implement gradual accumulation of the redundancy bits and complete an incremental redundancy HARQ operation. Specifically, FIG. 2 is a diagram of a redundancy version RV according to an embodiment of this application. As shown in FIG. 2, data obtained by performing channel coding on a TB includes basic data corresponding to a system bit (S) and redundant data corresponding to a redundancy bit (P), and the basic data and the redundant data are placed in an annular buffer. Four RVs, namely, RV0, RV1, RV2, and RV3, indicate to obtain the data from the annular buffer by using different locations as start points. A lower left corner in FIG. 2 indicates a length of a time domain resource occupied by each RV when four repeated transmissions are performed based on redundancy versions (0, 2, 3, 2). In a current NR standard, aggregated slot quantities corresponding to repeated transmissions are the same. Therefore, lengths of time domain resources occupied by RVs are also the same.

In a possible implementation, the repetition technology and the TBoMS technology may be jointly used. Configuration grant (configured grant, CG) type 2 (type 2) scheduling in a PUSCH scheduling scenario is used as an example. An aggregated slot quantity N is configured in radio resource control (radio resource control, RRC) signaling, and may be specifically configured in a PUSCH time domain resource allocation (time domain resource allocation, TDRA) information element (information element, IE) (where the aggregated slot quantity is configured at a same location as a conventional repetition quantity in NR), that is, the aggregated slot quantity and the repetition quantity are configured in same RRC signaling. Then, in uplink data scheduling, a network side activates the configuration by delivering downlink control information (downlink control information, DCI) to UE, and the UE obtains an aggregated slot quantity N in TBoMS and a repetition quantity M for subsequent uplink PUSCH sending based on a row number that is in the PUSCH_TDRA IE in the RRC signaling and that is indicated by a TDRA field in the DCI signaling. The TBoMS technology also supports dynamic grant (dynamic grant, DG) and CG type 1 scheduling scenarios of uplink transmission in addition to the CG type 2 scheduling scenario. In the type 1 scheduling, an aggregated slot quantity N and a repetition quantity M are directly delivered to UE through RRC signaling, and activation using DCI is not needed.

In a possible implementation, only one code block (code block, CB) is communicated in same TBoMS. In other words, the TBoMS does not support transport block segmentation. In addition, one RV is used in TBoMS transmission, and different RV versions are used in the TBoMS for a plurality of repeated transmissions.

In a voice over Internet protocol (voice over Internet protocol, VoIP) scenario, a link budget of a VoIP PUSCH is specifically enumerated in Table 1.

Table 1

| Physical channel | SCS (kHz) | Quantity of PRBs | Terminal elevation angle in an orbit parameter set | CNR (dB) |
|---|---|---|---|---|
| PUSCH | 15 | 2 | GEO_SET1_12.5° | -18.743 |
| | | | GEO_SET2_20° | -23.577 |
| | | | LEO1200_SET1_30° | -10.549 |
| | | | LEO1200_SET2_30° | -16.549 |
| | | | LEO600_SET1_30° | -5.163 |
| | | | LEO600_SET2_30° | -11.163 |

Table 1 indicates a link budget that is of the PUSCH and that corresponds to a subcarrier spacing (subcarrier spacing, SCS) of 15 kHz and a quantity of physical resource blocks (Physical Resource Blocks, PRBs) of 2. A maximum composite noise ratio (composite noise ratio, CNR) is -5.163 dB, and a minimum composite noise ratio is -23.577 dB. In parameter settings of a satellite and a terminal capability in 3GPP TS 38.821, a decoding threshold for an uplink data transmission channel of a VoIP service in an NTN scenario is high (that is, a requirement for a signal-to-noise ratio of the transmission channel is high), and it is difficult to meet the link budget enumerated in Table 1.

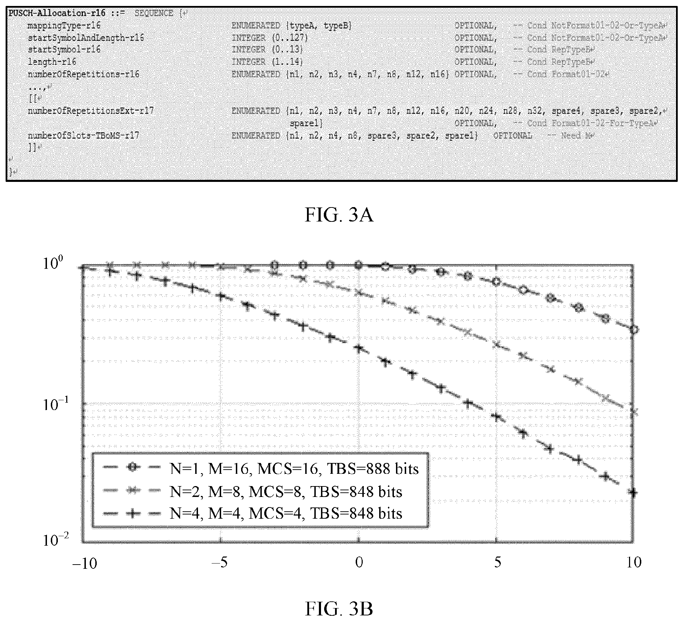

In a possible implementation, a link coverage level may be improved by using a technology combining the repetition technology and the TBoMS technology. For example, in a VoIP scenario, a network side configures, in an IE: *PUSCH-TimeDomainResourceAllocation* of an RRC parameter, a repetition quantity $M_{rep}$ and an aggregated slot quantity in TBoMS $N_{tboms}$ that need to be used by UE to perform an uplink transmission. Value ranges of the foregoing two parameters are: $M_{rep}$ = {1, 2, 3, 4, 7, 8, 12, 16, 20, 24, 28, 32} and $N_{tboms}$ = {1, 2, 4, 8}. Specifically, FIG. 3A is a diagram of indication signaling for a repeated transmission quantity and an aggregated slot quantity according to an embodiment of this application. As shown in FIG. 3A, in an IE of an RRC parameter, a value of a "numberofRepetitionsEex-r17" parameter, namely, a value of the repeated transmission quantity $M_{rep}$, is set, and a value of a "numberOfSlots-TBoMS-r17" parameter, namely, a value of $N_{tboms}$, is set. To be specific, in an existing standard, the network side only can deliver an existing parameter value in the RRC parameter to the UE. In addition, based on a constraint that a maximum consecutive transmission quantity cannot exceed 32 slots, it can be learned that the network side needs to obey the following constraint on the two time domain resource allocation parameters: $M_{rep} \times N_{tboms} \leq 32$.

Currently, a maximum transmission time period for VoIP service simulation is 16 ms. When a transmission time period consumed when the repetition technology and the TBoMS technology are combined is 16 ms, a decoding threshold for a line of sight (line of sight, LOS) channel is -5.5 dB, only meets a CNR of -5.5 dB corresponding to LEO600 SET1 30°, and does not meet other conditions.

In some scenarios, uplink data transmission is limited by a transmission interval. In the VoIP scenario, a transmission interval for a voice packet may be 20 ms. When a voice packet is communicated at an interval of 20 ms for the VoIP service, based on the constraint: $M_{rep} \times N_{tboms} \leq 32$, when the TBoMS technology is jointly used with the repetition technology and the SCS=15 kHz (one slot=1 ms), there are five combined delivery manners enumerated in Table 2 for the repetition quantity and the aggregated slot quantity in TBoMS that are indicated by the network side to the UE.

Table 2

| $M_{rep}$ | $N_{tboms}$ |
|---|---|
| 20 | 1 |
| 16 | 1 |
| 8 | 2 |
| 4 | 4 |
| 2 | 8 |

From a perspective of terminal processing (decoding, receiver processing, and the like) complexity, a simple time domain resource indication manner for scheduling PUSCH transmission is a 1st row in Table 2. To be specific, a transport block is repeatedly sent only for 20 times, and the receive end performs decoding through the CC combining or IR combining. However, only performing the repeated transmission on the transport block does not bring an additional coding gain from the TBoMS. For example, FIG. 3B is a diagram of performance achieved by combining a repetition technology and a TBoMS technology according to an embodiment of this application. A horizontal axis represents a signal-to-noise ratio, and a vertical axis represents a block error rate (block error rate, BLER). N represents an aggregated slot quantity in TBoMS, M represents a repeated transmission quantity, MCS represents a modulation and coding scheme (modulation and coding scheme), and TBS represents a transport block size (transport block size). It can be learned from example simulation results shown in FIG. 3B that, a transmit end uses only the repetition technology but does not perform TBoMS aggregation (for example, N=1, and M=16), and there is worst decoding performance in three value combinations. A larger value of N indicates better decoding performance. When the transmit end uses a combination of M and N in which N>1 for transmission, a coverage enhancement effect is better.

As enumerated in Table 2, when $N_{thoms}$>1, based on a selected combination of $M_{rep}$ and $N_{thoms}$, a transmission opportunity of 20 ms cannot be completely used in combining the repetition technology with the TBoMS aggregation to meet a coverage improvement requirement. As a result, an ideal coverage enhancement effect cannot be achieved.

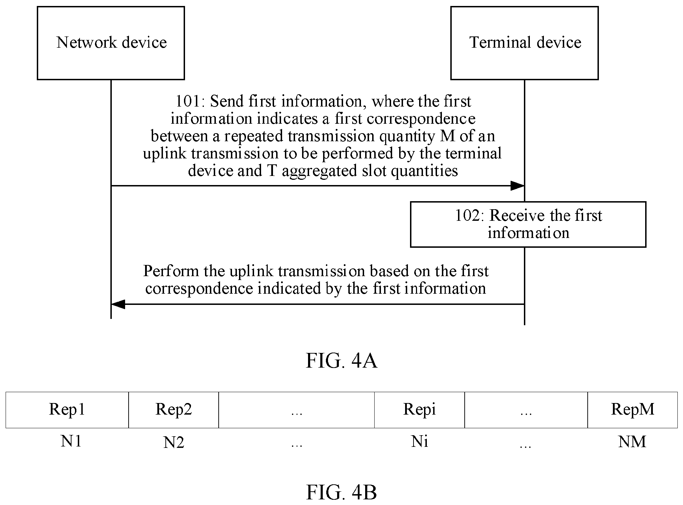

Based on this, FIG. 4A is a diagram of a data scheduling method according to an embodiment of this application. As shown in FIG. 4A, the method includes the following process:

101: A network device sends first information, where the first information indicates a first correspondence between a repeated transmission quantity M of an uplink transmission to be performed by a terminal device and T aggregated slot quantities, where M is an integer greater than or equal to 1, and T is an integer greater than or equal to 1 and less than or equal to M.

In this embodiment of this application, the network device sends indication information to the terminal device, to indicate the first correspondence between the repetition quantity M of the uplink transmission to be performed by the terminal device and the T aggregated slot quantities in TBoMS. 1≤T≤M. A TBoMS technology is combined with a repetition technology flexibly, so that a transmission opportunity can be more fully used in a repeated transmission, to improve a coverage enhancement effect. It should be noted that the aggregated slot quantity in embodiments of this application is an aggregated slot quantity in the TBoMS. Details are not described below again.

In a possible implementation, duration that is occupied by the uplink transmission and that is determined based on the correspondence is first duration, and the first duration is greater than 16 milliseconds. The terminal device performs the uplink transmission based on the first correspondence indicated by the indication information, so that the duration occupied by the uplink transmission may be greater than 16 ms. The first duration may be 20 ms. In other words, the uplink transmission is performed based on the indication information in this embodiment of this application, so that the uplink transmission performed by the terminal device can fully occupy a transmission opportunity of 20 ms.

Specifically, this embodiment of this application may include two implementations. In one implementation, T=1; and in the other implementation, T>1.

When T=1, the first correspondence exists between the repeated transmission quantity M and one aggregated slot quantity.

In a possible implementation, a value set (a second set) of the repeated transmission quantity M may include 5 and/or 10. In other words, when a transmission time interval is 20 ms and an SCS is 15 kHz, the repeated transmission quantity described before the method in FIG. 4A is any one in a set {1, 2, 3, 4, 7, 8, 12, 16, 20, 24, 28, 32} of original M. In this possible implementation, M is any one of the second set, and the second set={1, 2, 3, 4, **5,** 7, 8, 12, 16, 20, 24, 28, 32}. Correspondingly, a value of the parameter "numberofRepetitionsEex-r17" indicating the repeated transmission quantity in FIG. 3A may be changed to ENUMERATED {n1, n2, n3, n4, **n5,** n7, n8, n12, n16, n20, n24, n28, n32, spare3, spare2, spare1}. Alternatively, the second set={1, 2, 3, 4, 7, 8, **10,** 12, 16, 20, 24, 28, 32}, or the second set={1, 2, 3, 4, **5,** 7, 8, **10,** 12, 16, 20, 24, 28, 32}. Similarly, newly added 10 in the second set may be added, in a form of "n10", to the parameter value shown in FIG. 3A.

When the second set includes 5 and/or 10, and when M=5, the aggregated slot quantity N having the first correspondence with M is equal to 4, and the first duration is: M*N=20 ms. Similarly, when M=10, the aggregated slot quantity N having the first correspondence with M is equal to 2, and the first duration is: M*N=20 ms. Based on the two first correspondences, the duration (the first duration) occupied by the uplink transmission performed by the terminal device can exactly occupy a transmission opportunity of 20 ms in VoIP, to improve the coverage enhancement effect.

In another possible implementation, a value set (a first set) of the aggregated slot quantity in TBoMS includes 5. In other words, the aggregated slot quantity N described before the method in FIG. 4A is any one in a set {1, 2, 4, 8} of original N. In this embodiment of this application, N is any one of the first set, and the first set={1, 2, 4, 5, 8}. Correspondingly, a value of the parameter "numberofRepetitionsEex-r17" indicating the repeated transmission quantity in FIG. 3A may be changed to ENUMERATED {n1, n2, n4, **n5,** n8, spare2, spare1}. When N=5, the repeated transmission quantity M having the first correspondence with N is equal to 4, and the first duration is: M*N=20 ms.

The foregoing first correspondence is determined by using an example in which the SCS=15 kHz. When the SCS is another value, another first correspondence may also be determined. For example, the SCS=30 kHz, M=5, and the aggregated slot quantity N=8. In this case, duration of each slot is 0.5 ms, that is, the first duration is: M*N*0.5=20 ms. M=10, the aggregated slot quantity N=4, and the first duration is: M*N*0.5=20 ms. In other words, N having the first correspondence with M=5 is equal to 8, and N having the first correspondence with M=10 is equal to 4. When N=5, M=8, and the first duration is: M*N*0.5=20 ms. Based on these first correspondences, the duration occupied by the uplink transmission performed by the terminal device exactly can also occupy a transmission opportunity of 20 ms in VoIP, to improve the coverage enhancement effect. For other subcarrier spacings, first correspondences in which M=5 and/or 10 and N=5 can be determined in a same manner. Details are not described herein.

It can be learned that, in this embodiment of this application, a value of the repeated transmission quantity is added, or a value of the TBoMS is added, or values of both the repeated transmission quantity and the TBoMS are added, so that the repeated transmission technology and the TBoMS technology can be combined to completely occupy the transmission opportunity, and the transmission opportunity is fully used for the uplink data transmission, to achieve a better coverage enhancement effect.

When T>1, the first correspondence exists between the repeated transmission quantity M and a plurality of aggregated slot quantities in the TBoMS. Specifically, FIG. 4B is a diagram of a first correspondence according to an embodiment of this application. As shown in FIG. 4B, each repeated transmission Repi in the repeated transmission quantity M corresponds to one aggregated slot quantity Ni, where i=1, 2, 3, ..., M. In M aggregated slot quantities Ni, at least two aggregated slot quantities Ni have different values.

When T>1, a value set (a second set) of the repeated transmission quantity M may also include 5 and/or 10, and a value set (a first set) of the aggregated slot quantity N in the TBoMS may also include 5. For example, when M=5, an aggregated slot quantity having the first correspondence with M is {2, 4, 8, 4, 2}. Similarly, a first correspondence when M=10 and a first correspondence when the T aggregated slot quantities include N=5 may be determined.

In this embodiment, a manner of indicating the repeated transmission quantity M and the T aggregated slot quantities in the TBoMS is as follows:

In a possible implementation, the network device sends second information, where a correspondence between a repeated transmission quantity and an aggregated slot quantity set is configured in the second information, the first information indicates a first correspondence between the repeated transmission quantity M and a first aggregated slot quantity set in the second information, and a quantity of non-repeated elements in the first aggregated slot quantity set is T.

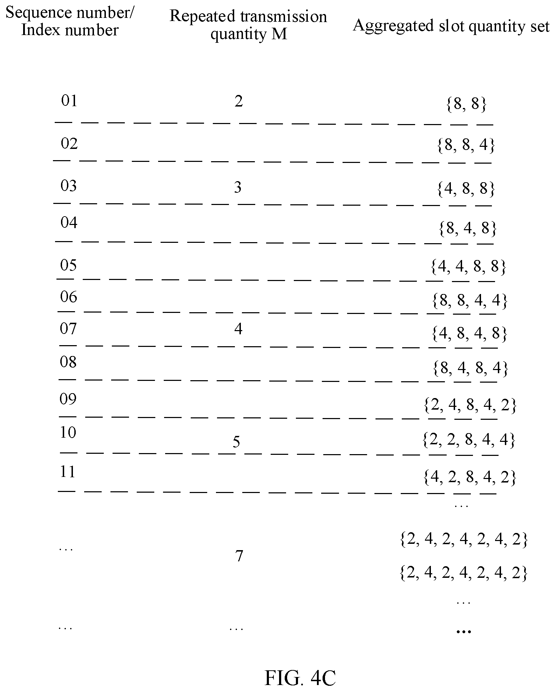

Specifically, FIG. 4C is a diagram of a correspondence between a repeated transmission quantity and an aggregated slot quantity set according to an embodiment of this application. As shown in FIG. 4C, each repeated transmission quantity corresponds to one or more aggregated slot quantity sets, and a quantity of non-repeated elements in the set is T. For example, when M=3, there are three corresponding aggregated slot quantity sets (where sets with different element sequences are different sets), and the sets are respectively a set {8, 8, 4}, a set {4, 8, 8}, and a set {8, 4, 8}. Each set includes two non-repeated elements, that is, T=2. These correspondences between the repeated transmission quantity and the aggregated slot quantity set are configured by using the second information, and then the first correspondence between the repeated transmission quantity M and the first aggregated slot quantity set is indicated by the first information. For example, a sequence number or an index number 05 indicating a first correspondence indicates a first correspondence between a repetition quantity M=4 and an aggregated slot quantity set {4, 4, 8, 8}. A first correspondence in which the newly added repeated transmission quantity M=5 and/or 10 or the aggregated slot quantity includes 5, for example, correspondences indicated by index numbers 09 to 11, may also be configured in the second information.

The second information may be RRC signaling or a system information block (system information block, SIB). In other words, configuration information is sent by using RRC signaling or a SIB. The first information may be carried in DCI or RRC signaling. To be specific, the network device activates the first correspondence by indicating the index number or the sequence number of the first correspondence in the DCI or the RRC signaling.

In another possible implementation, the first information is carried in RRC signaling, the RRC signaling includes the first correspondence between the repeated transmission quantity M and the aggregated slot quantity set, and a quantity of non-repeated elements in the aggregated slot quantity set is T.

In addition to being indicated in a manner of configuration first and then activation, the first correspondence may alternatively be directly indicated by using the RRC signaling. Specifically, the RRC signaling may explicitly indicate all parameters in the first correspondence, including M and a complete aggregated slot quantity set {N1, N2, ..., NM} corresponding to M, where a quantity of elements in the complete aggregated slot quantity set=M (a quantity T of types of the aggregated slot quantities included in the set is a parameter that may be obtained based on the elements in the aggregated slot quantity set, and may be indicated or may not be indicated). For example, if the RRC signaling indicates M=3 and a complete aggregated slot quantity set {4, 8, 8}, the terminal device may directly determine that the first correspondence exists between M=3 and the set {4, 8, 8}.

Alternatively, the RRC signaling may explicitly indicate a part of parameters in the first correspondence, and the other part of parameters are obtained based on the part of parameters explicitly indicated. For example, the RRC signaling indicates M=7 and an aggregated slot quantity set {2, 4}, where the aggregated slot quantity N=2 corresponds to an odd repeated transmission quantity, and N=4 corresponds to an even repeated transmission quantity. In other words, the two aggregated slot quantities {N1, N2}={2, 4} cyclically correspond to the repeated transmission quantity. In this case, the RRC signaling does not indicate the complete aggregated slot quantity set, but it may be determined, based on the information indicated by the RRC signaling, that a complete aggregated slot quantity set corresponding to M=7 is {2, 4, 2, 4, 2, 4, 2}. Similarly, the RRC signaling may indicate a complete aggregated slot quantity set {N1, N2, ..., Nm}={2, 4, 8, 4, 2}, and does not indicate M. The terminal device may determine, based on the complete aggregated slot quantity set, that M=5.

After determining M and the complete aggregated slot quantity set corresponding to M, the terminal device may determine the duration (the first duration) occupied by the uplink transmission. For example, when M=5, and the complete aggregated slot quantity set={2, 4, 8, 4, 2}, the first duration=2+4+8+4+2=20 ms. The transmission opportunity of 20 ms in VoIP can be completely occupied.

When T=1, configuration may also be performed based on the second information sent by using the RRC signaling or the SIB. To be specific, the diagram of the correspondence, namely, FIG. 4C, may include a correspondence between M and single N or a set including single N, and then the first information is sent by using the RRC signaling or the DCI to indicate or activate the correspondence. Alternatively, the correspondence between M and single N may be directly indicated by using the RRC signaling. Details are not described herein.

The foregoing example is described by using the SCS=15 kHz. Similarly, when the SCS is another value, the first correspondence may also be indicated in the foregoing two manners. For example, when the SCS=30 kHz, the first information may indicate M=4 and a complete aggregated slot quantity set {16, 16, 4, 4} corresponding to M=4. For other cases of other SCSs, details are not described in this embodiment of this application.

102: The terminal device receives the first information, and performs the uplink transmission based on the first correspondence indicated by the first information. Correspondingly, the network device receives uplink transmission data, where the uplink transmission data is sent based on the first correspondence indicated by the first information.

After receiving the first correspondence indicated by the first information, the terminal device determines, based on the first correspondence, an aggregated slot quantity corresponding to each repeated transmission, and then performs the corresponding repeated transmission based on the corresponding aggregated slot quantity. The corresponding

$$\text{first duration}=\sum_{i=1}^{i=M} Ni$$

. Apparently, more possible values of the first duration can be obtained in comparison with a case in which only one value of M and one value of N corresponding to the value of M are indicated. Therefore, a probability that the terminal device can occupy all transmission opportunities when performing the uplink transmission by using this correspondence is higher.

The network device receives the uplink transmission data sent by the terminal device. Because the network device sends first indication information to the terminal device to indicate how the terminal device is to perform the uplink transmission corresponding to the M repeated transmissions, after receiving an encoded unit (for example, a data package or a data packet) corresponding to the uplink transmission data, the network device may determine how to perform decoding, and obtain the uplink transmission data in the encoded unit.

Further, an RV is described in the foregoing related content. In a scenario in which the repetition technology and the TBoMS technology are jointly used, different RV cyclic manners may be selected for the repeated transmissions.

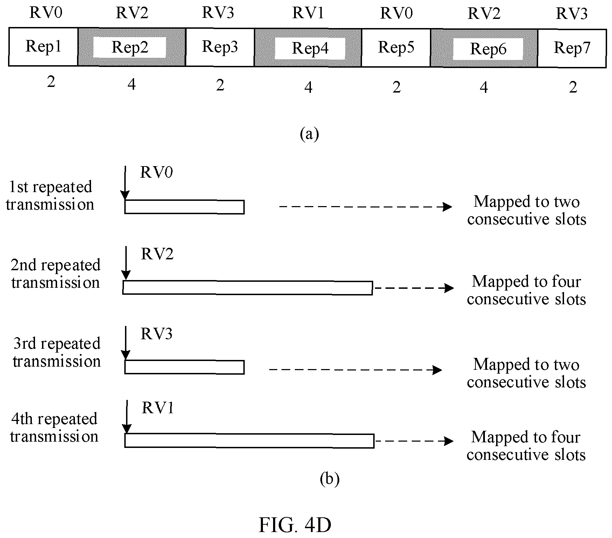

(1) Cyclic manner of RVs={0, 2, 3, 1}: FIG. 4D is a diagram of an RV application according to an embodiment of this application. As shown in (a) in FIG. 4D, RV0, RV2, RV3, and RV1 cyclically correspond to seven repeated transmission quantities, and correspond to an aggregated slot quantity (including two aggregated slot quantities 2 and 4) of each repeated transmission.

In addition, in this embodiment of this application, because different repeated transmission quantities correspond to different aggregated slot quantities, lengths of time domain resources correspondingly occupied by the four RVs are also different. For details, refer to (b) in FIG. 4D. If RV0 corresponds to a 1st repeated transmission, and the aggregated slot quantity is 2, RV0 is mapped to two consecutive slots. By analogy, RV2 is mapped to four consecutive slots, RV3 is mapped to two consecutive slots, and RV1 is mapped to four consecutive slots. More broadly, quantities of consecutive slots to which RV0, RV2, RV3, and RV1 are mapped are sequentially determined based on aggregated slot quantities corresponding to M$^{th}$ (where M is M mod 4=1, M mod 4=2, M mod 4=3, and M mod 4=0) repeated transmission quantities, where M represents a total repeated transmission quantity.

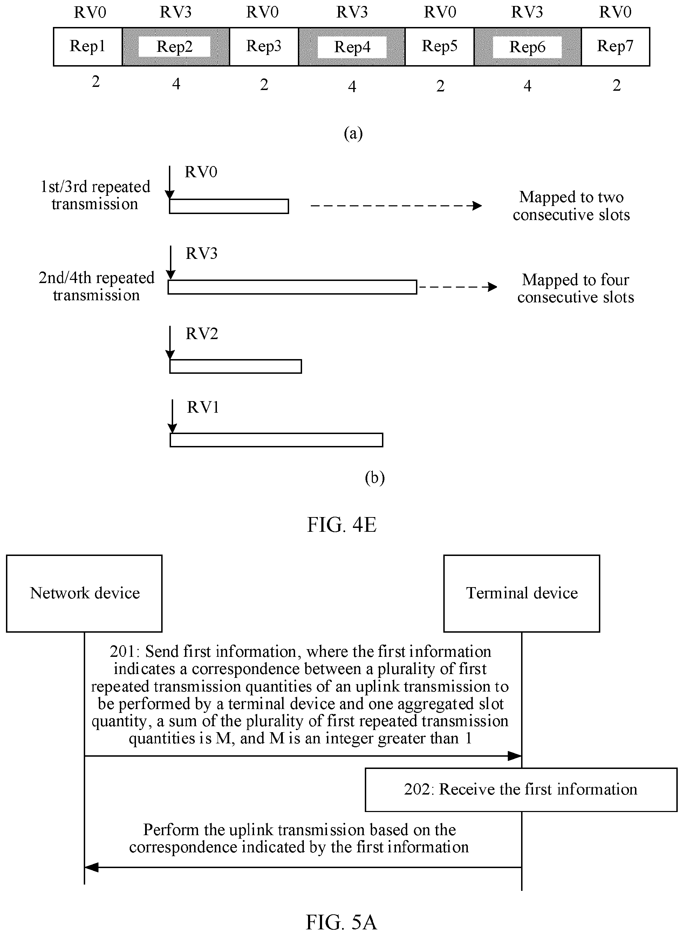

(2) Cyclic manner of RVs={0, 3, 0, 3}: FIG. 4E is a diagram of another RV application according to an embodiment of this application. As shown in (a) in FIG. 4E, RV0, RV3, RV0, and RV3 cyclically correspond to seven repeated transmission quantities, and correspond to an aggregated slot quantity (including two aggregated slot quantities 2 and 4) of each repeated transmission.

Similarly, a length of a time domain resource occupied by the RV is determined based on an aggregated slot quantity corresponding to a repeated transmission quantity corresponding to the RV. Refer to (b) in FIG. 4E. If RV0 corresponds to a 1st repeated transmission, and the aggregated slot quantity is 2, RV0 is mapped to two consecutive slots. By analogy, it may be determined that RV3 is mapped to four consecutive slots. More broadly, a quantity of consecutive slots to which RV0 is mapped is determined based on aggregated slot quantities corresponding to M$^{th}$ (where M is M mod 4=1 and M mod 4=3) repeated transmission quantities, and a quantity of consecutive slots to which RV3 is mapped is determined based on aggregated slot quantities corresponding to M$^{th}$ (where M is M mod 4=2 and M mod 4=0) repeated transmission quantities. Because RV1 and RV2 are not used in this example, lengths of time domain resources occupied by RV1 and RV2 are not considered.

Optionally, the length of the time domain resource occupied by each RV may be indicated in the first information or other information, and may be specifically determined based on an aggregated slot quantity corresponding to each repeated transmission. In this way, a quantity of consecutive slots to which the RV is mapped can be adaptively adjusted with a flexibly changing aggregated slot quantity, to improve reliability of a communication process.

In addition, it should be noted that the foregoing embodiment is described by using an example in which the transmission opportunity in VoIP is 20 ms. In another communication service scenario, for another transmission opportunity, a first correspondence between a repeated transmission quantity M and T aggregated slot quantities in the TBoMS that have the first correspondence may also be determined in the manner in this embodiment of this application. These correspondences can enable duration occupied by an uplink transmission to be close to or equal to the another transmission opportunity. The terminal device performs the uplink transmission based on the first correspondence, so that transmission opportunities of a related communication service can be occupied as much as possible, to achieve a better coverage enhancement effect. The descriptions are also applicable to the following embodiments, and details are not described in the following embodiments again.

It can be learned that in this embodiment of this application, the repeated transmission quantity M corresponds to at least two aggregated slot quantities in the TBoMS, so that different types of aggregated slot quantities are combined in the M repeated transmissions, and transmission opportunities are occupied as much as possible. In this way, more transmission opportunities can be for the uplink data transmission, to achieve the better coverage enhancement effect.

In all the foregoing embodiments, the correspondence between the repeated transmission quantity M and the aggregated slot quantity in the TBoMS is indicated in one batch, to determine the corresponding aggregated slot quantity in the M repeated transmissions. Actually, the M repeated transmissions may alternatively be split, and an aggregated slot quantity corresponding to each part of repeated transmissions is separately indicated, to determine the aggregated slot quantity corresponding to the M repeated transmissions. Specifically, FIG. 5A is a flowchart of a data scheduling method according to an embodiment of this application. As shown in FIG. 5A, the method includes the following steps.

201: A network device sends first information, where the first information indicates a correspondence between a plurality of first repeated transmission quantities of an uplink transmission to be performed by a terminal device and one aggregated slot quantity, a sum of the plurality of first repeated transmission quantities is M, and M is an integer greater than 1. In this embodiment of this application, the network device sends indication information to the terminal device, to indicate the correspondence between the plurality of first repeated transmission quantities and one aggregated slot quantity in TBoMS. The sum of the plurality of first repeated transmission quantities is M. In other words, the M repeated transmission quantities and aggregated slot quantities corresponding to the M repeated transmission quantities are indicated by segments.

In a possible implementation, duration that is occupied by the uplink transmission and that is determined based on the correspondence is first duration, and the first duration is greater than 16 milliseconds. The first duration may be 20 milliseconds.

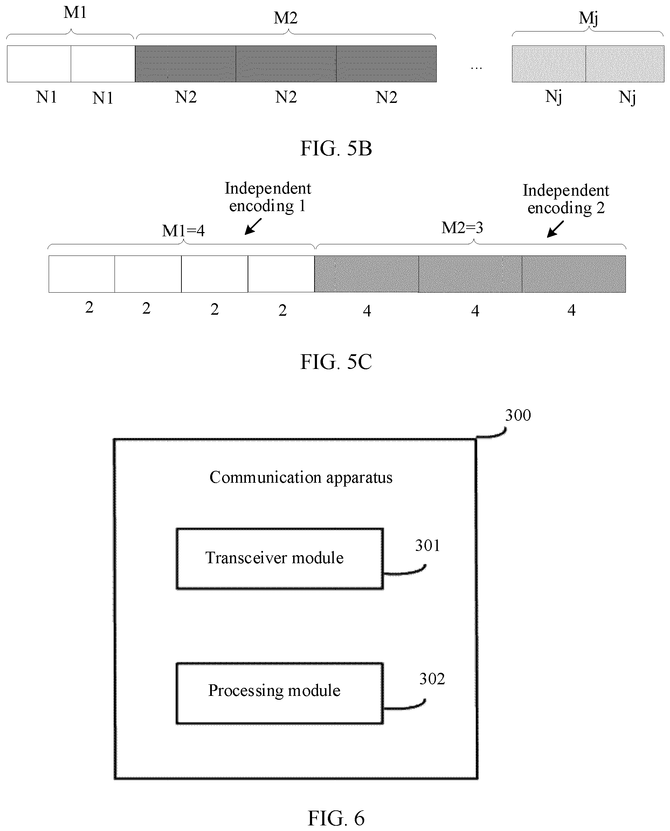

Specifically, FIG. 5B is a diagram of a correspondence between a first repeated transmission quantity and an aggregated slot quantity according to an embodiment of this application. As shown in FIG. 5B, it is assumed that a repeated transmission quantity M is split into j first repeated transmission quantities that are respectively M1, M2, ..., and Mj, where j is greater than or equal to 2, and M1+M2+...Mj=M. An aggregated slot quantity corresponding to M1 repeated transmissions is N1, an aggregated slot quantity corresponding to M2 repeated transmissions is N2, and an aggregated slot quantity corresponding to Mj repeated transmissions is Nj. In this case, duration (first duration) that is occupied by an uplink transmission and that is determined based on the correspondence is M1*N1+M2*N2+...+Mj*Nj (this corresponds to an SCS=15 kHz; and in a case of another SCS, duration occupied by the Mj repeated transmissions may be obtained by multiplying Mj*Nj by a quantity of milliseconds of each slot).

In this embodiment, the correspondence between the plurality of first repeated transmission quantities and the aggregated slot quantity may be indicated in the following manner:

In a possible implementation, the network device sends second information, where a correspondence between a repeated transmission quantity and an aggregated slot quantity is configured in the second information, and the first information indicates a correspondence between each of the plurality of first repeated transmission quantities and the aggregated slot quantity in the second information.

The repeated transmission quantity may be any value in the foregoing set {1, 2, 3, 4, 7, 8, 12, 16, 20, 24, 28, 32}, and the aggregated slot quantity set may be any value in {1, 2, 4, 8}. In this case, for the correspondence between the repeated transmission quantity and the aggregated slot quantity, refer to Table 3.

Table 3

| Sequence number/Index number | Repeated transmission quantity | Aggregated slot quantity set |
|---|---|---|
| 01 | 2 | 2 |
| 02 | | 4 |
| 03 | | 8 |
| 04 | 3 | 2 |
| 05 | | 4 |
| 06 | | 8 |
| 07 | 4 | 2 |
| 08 | | 4 |
| 09 | | 8 |

(continued)

| Sequence number/Index number | Repeated transmission quantity | Aggregated slot quantity set |
|---|---|---|
| 10 | | 2 |
| 11 | 5 | 4 |
| 12 | | 8 |
| ... | ... | ... |

Each repeated transmission quantity may correspond to the aggregated slot quantities 2, 4, and 8, and a correspondence between each repeated transmission quantity and an aggregated slot quantity may be identified by using the sequence number or the index number. Content enumerated in Table 3 is configured in the second information.

Then, the first information indicates a correspondence between each of the plurality of first repeated transmission quantities and an aggregated slot quantity, for example, indicates M1=4, N1=2, M2=3, and N2=4. To be specific, the first information may specifically indicate index numbers or sequence numbers of these correspondences in the configured content, for example, indicate the index numbers 07 and 05.

In some cases, a second set corresponding to the repeated transmission quantity may include 5 and/or 10 described in the foregoing embodiment, and a first set corresponding to the aggregated slot quantity may include 5 described in the foregoing embodiment. For example, it is configured in Table 3 that when M=5, there are correspondences between M=5 and aggregated slot quantities 2, 4, and 8.

In a possible implementation, the second information may be RRC signaling or a SIB, and the first information may be carried in DCI or RRC signaling.

In another possible implementation, the first information is carried in RRC signaling, and the RRC signaling includes a correspondence between each of the plurality of first repeated transmission quantities and one aggregated slot quantity.

In other words, the correspondence between each first repeated transmission quantity and the aggregated slot quantity may be directly indicated by the RRC signaling. For example, two correspondences (M1=4, N1=2) and (M2=3, N2=4) are directly indicated, and no additional signaling is needed for activation.

Optionally, the first information may further indicate an execution order of the plurality of first repeated transmission quantities, for example, indicate that M1 is a repeated transmission quantity that is first executed. In this case, in seven repeated transmission quantities corresponding to the uplink transmission, first four repeated transmission quantities that are first executed correspond to the aggregated slot quantity as 2.

202: The terminal device receives the first information, and performs the uplink transmission based on the correspondence indicated by the first information. Correspondingly, the network device receives uplink transmission data, where the uplink transmission data is sent based on the correspondence indicated by the first information.

After receiving the first information, the terminal device determines, based on the correspondence indicated by the first information, to perform a corresponding quantity of repeated transmissions in the M repeated transmissions based on the aggregated slot quantity corresponding to each first transmission quantity. When j first transmission quantities are included in total, corresponding first duration=M1 *N 1 + M2 *N2+... + Mj *Nj. Apparently, more possible values of the first duration can be obtained in comparison with a case in which only one value of M and one value of N corresponding to the value of M are indicated. Therefore, a probability that the terminal device can occupy all transmission opportunities when performing the uplink transmission by using this correspondence is higher.

The terminal device receives the uplink transmission data sent by the network device. Because the network device sends first indication information to the terminal device to indicate how the terminal device is to perform the uplink transmission corresponding to the M repeated transmissions, after receiving an encoded unit (for example, a data package or a data packet) corresponding to the uplink transmission data, the network device may determine how to perform decoding, and obtain the uplink transmission data in the encoded unit.

It can be learned that in this embodiment of this application, the correspondence between the plurality of first repeated transmission quantities and one aggregated slot quantity may be indicated, to indicate the correspondence between all the M repeated transmissions and the aggregated slot quantity. In this process, the indicated correspondence between the repeated transmission quantity and the aggregated slot quantity is the same as that in an existing protocol, and a difference lies only in that more than one correspondence is indicated. The method is used for indication, so that complexity and resource overheads of an indication process can be reduced, and the transmission opportunity can be occupied as much as possible, to improve a coverage enhancement effect.

Further, in a possible implementation, in the uplink transmission in this method, a repeated transmission corresponding to each first repeated transmission quantity is independently encoded.

Specifically, FIG. 5C is a diagram of independent encoding according to an embodiment of this application. As shown in FIG. 5C, assuming that the network device indicates two correspondences: (M1=4, N1=2) and (M2=3, N2=4), aggregated slot quantities corresponding to first four repeated transmissions corresponding to M1 are all 2, and aggregated slot quantities corresponding to last three repeated transmissions corresponding to M2 are all 4. It is assumed that the first four repeated transmissions and the last three repeated transmissions are independently encoded. In this case, after receiving two encoded units sent by the terminal device, the network device can decode a same encoded unit based on a unified aggregated slot quantity, to reduce decoding complexity at a receive end.

It can be learned that in this embodiment of this application, in an uplink transmission process, independent coding is performed on a repeated transmission of each of the plurality of first repeated transmission quantities, so that decoding complexity at a receive end can be reduced, decoding efficiency can be improved, and data transmission efficiency can be improved.

It should be noted that this embodiment of this application is used in combination with the foregoing embodiments in FIG. 4A to FIG. 4E. In other words, the first information may indicate a plurality of first repeated transmission quantities, and each first repeated transmission quantity may correspond to one aggregated slot quantity, or may correspond to a plurality of aggregated slot quantities. For example, M=7, M1=2, and N1=2; and M2=5, and a corresponding aggregated slot quantity set is {4, 2, 4, 2, 4}. In this case, when M=7, a corresponding aggregated slot quantity set is {2, 2, 4, 2, 4, 2, 4}. In this indication manner, a resource occupied by indicated content can also be reduced. Assuming that the repetition quantity corresponding to M1 and the repetition quantity corresponding to M2 are separately encoded, the decoding complexity at the receive end can also be reduced, and the data transmission efficiency can be improved.

In addition, the embodiments described in FIG. 4A to FIG. 4E and FIG. 5A to FIG. 5C in this application are technologies combining the repetition technology and the TBoMS technology in the coverage enhancement technology. These technical methods may be further used in combination with other coverage enhancement technologies. For example, these methods are in combination with a joint channel estimation technology, and a window length of joint channel estimation is set to be greater than or equal to $\sum_{i=1}^{i=M} Ni$ or $\sum_{k=1}^{k=j} Mk * Nk$ (k represents k first repeated transmissions obtained by splitting the M repeated transmissions). In this case, the joint channel estimation may be performed in consecutive slots corresponding to the M repeated transmissions. Alternatively, these technical methods may be used in combination with a frequency modulation technology. Frequency modulation is not performed in Ni slots corresponding to a same repeated transmission, but may be performed in slots corresponding to different repeated transmissions, to ensure communication quality and obtain a channel frequency selection gain. A manner of combining these methods with other technologies is similar, and is not enumerated herein.

FIG. 6 shows a communication apparatus 300 according to an embodiment of this application. The communication apparatus includes a module or a unit configured to implement the method in the method embodiment and any possible design of the method embodiment in FIG. 4A or FIG. 5A. The module or the unit may be a hardware circuit, may be software, or may be implemented by the hardware circuit in combination with the software. The communication apparatus may be a terminal device, or may be an apparatus (for example, a chip, a chip system, or a circuit) in the terminal device and the network device or an apparatus that can be used together with the terminal device. The apparatus may include a transceiver module 301 and a processing module 302.

When the communication apparatus 300 is configured to implement the functions of the terminal device in the method embodiment shown in FIG. 4A, the transceiver module 301 is configured to receive first information, where the first information indicates a first correspondence between a repeated transmission quantity M of an uplink transmission to be performed by a terminal device and T aggregated slot quantities, M is an integer greater than or equal to 1, and T is an integer greater than or equal to 1 and less than or equal to M; and the processing module 302 is configured to perform uplink transmission in combination with the transceiver module 301 based on the first correspondence indicated by the first information.

When the communication apparatus 300 is configured to implement the functions of the terminal device in the method embodiment shown in FIG. 5A, the transceiver module 301 is configured to receive first information, where the first information indicates a correspondence between a plurality of first repeated transmission quantities of an uplink transmission to be performed by a terminal device and one aggregated slot quantity, a sum of the plurality of first repeated transmission quantities is M, and M is an integer greater than 1; and the processing module 302 is configured to perform uplink transmission in combination with the transceiver module 301 based on the first correspondence indicated by the first information.

When the communication apparatus 300 is configured to implement the functions of the network device in the method embodiment shown in FIG. 4A, the transceiver module 301 is configured to send first information, where the first information indicates a first correspondence between a repeated transmission quantity M of an uplink transmission to be performed by a terminal device and T aggregated slot quantities, M is an integer greater than or equal to 1, and T is an integer greater than or equal to 1 and less than or equal to M; and the transceiver module 301 is further configured to receive the uplink transmission data, where the uplink transmission data is sent based on the first correspondence indicated by the first information.

When the communication apparatus 300 is configured to implement the functions of the network device in the method embodiment shown in FIG. 5A,

the transceiver module 301 is configured to send first information, where the first information indicates a correspondence between a plurality of first repeated transmission quantities of an uplink transmission to be performed by a terminal device and one aggregated slot quantity, a sum of the plurality of first repeated transmission quantities is M, and M is an integer greater than 1; and the transceiver module 301 is further configured to receive the uplink transmission data, where the uplink transmission data is sent based on the correspondence indicated by the first information.

For more detailed descriptions of the transceiver module 301 and the processing module 302, refer to related descriptions in the foregoing method embodiments. Details are not described herein again.

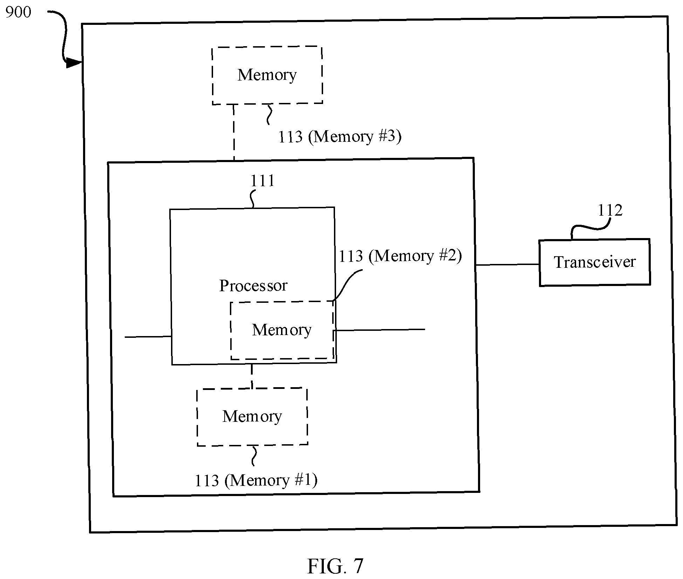

FIG. 7 is a diagram of a hardware structure of a communication apparatus according to an embodiment of this application. For a structure of the communication apparatus in FIG. 6, refer to the structure shown in FIG. 7. A communication apparatus 900 includes a processor 111 and a transceiver 112. The processor 111 and the transceiver 112 are electrically coupled.

The processor 111 is configured to execute a part or all of computer program instructions in a memory. When the part or all of the computer program instructions are executed, the apparatus is enabled to perform the method in any one of the foregoing embodiments.

The transceiver 112 is configured to communicate with another device, for example, receive first information from a network device, where the first information indicates a correspondence between a plurality of first repeated transmission quantities of an uplink transmission to be performed by a terminal device and one aggregated slot quantity.

Optionally, the apparatus further includes a memory 113, configured to store the computer program instructions. Optionally, the memory 113 (a memory #1) is located inside the apparatus, and the memory 113 (a memory #2) is integrated with the processor 111, or the memory 113 (a memory #3) is located outside the apparatus.

It should be understood that the communication apparatus 900 shown in FIG. 7 may be a chip or a circuit, for example, a chip or a circuit that may be disposed in a terminal apparatus or a communication apparatus. The transceiver 112 may alternatively be a communication interface. The transceiver includes a receiver and a transmitter. Further, the communication apparatus 900 may further include a bus system.

The processor 111, the memory 113, and the transceiver 112 are connected by using the bus system. The processor 111 is configured to execute instructions stored in the memory 113, to control the transceiver to receive a signal and send a signal, to complete steps of the first device or the second device in the implementation method in this application. The memory 113 may be integrated into the processor 111, or may be disposed separately from the processor 111.

As an implementation, a function of the transceiver 112 may be implemented by using a transceiver circuit or a dedicated transceiver chip. The processor 111 may be implemented by using a dedicated processing chip, a processing circuit, a processor, or a general-purpose chip. The processor may be a central processing unit (central processing unit, CPU), a network processor (network processor, NP), or a combination of a CPU and an NP. The processor may further include a hardware chip or another general-purpose processor. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL) and another programmable logic device, a discrete gate or a transistor logic device, a discrete hardware component, or the like, or any combination thereof. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It is to be noted that the memory described in this application aims to include but is not limited to these memories and any memory of another proper type.

An embodiment of this application provides a computer storage medium, storing a computer program. The computer program is for performing the method applied to the network device or the terminal device in the foregoing embodiments.

An embodiment of this application provides a computer program product including instructions. When the computer program product runs on a computer, the computer is enabled to perform the method applied to the network device or the terminal device in the foregoing embodiments.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes outside the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The modules described as separate parts may or may not be physically separate, and parts displayed as modules may or may not be physical modules, may be located in one position, or may be distributed on a plurality of network modules. Some or all the modules may be selected based on actual needs to achieve the objectives of the solutions of embodiments.

In addition, functional modules in embodiments of this application may be integrated in one processing module, or each of the modules may exist alone physically, or two or more modules may be integrated in one module.

When the functions are implemented in the form of a software functional module and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes a plurality of instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk drive, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A data scheduling method, wherein the method comprises:

   obtaining first information, wherein the first information indicates a correspondence between a repeated transmission quantity M of an uplink transmission to be performed by a terminal device and an aggregated slot quantity, and the aggregated slot quantity is an aggregated slot quantity in transport block processing over multiple slots TBoMS; and the correspondence comprises a first correspondence between the repeated transmission quantity M and T aggregated slot quantities, or the correspondence comprises a correspondence between a plurality of first repeated transmission quantities and one aggregated slot quantity, wherein a sum of the plurality of first repeated transmission quantities is M, M is an integer greater than or equal to 1, and T is an integer greater than or equal to 1 and less than or equal to M; and
   performing the uplink transmission based on the correspondence.

2. The method according to claim 1, wherein before the obtaining first information, the method further comprises:

    receiving second information, wherein a correspondence between a repeated transmission quantity and an aggregated slot quantity set is configured in the second information, the first information indicates a first correspondence between the repeated transmission quantity M and a first aggregated slot quantity set in the second information, and a quantity of elements in the first aggregated slot quantity set is T; or
    a correspondence between a repeated transmission quantity and an aggregated slot quantity is configured in the second information, and the first information indicates a correspondence between each of the plurality of first repeated transmission quantities and the aggregated slot quantity in the second information.

3. A data scheduling method, wherein the method comprises:

    sending first information, wherein the first information indicates a correspondence between a repeated transmission quantity M of an uplink transmission to be performed by a terminal device and an aggregated slot quantity, and the aggregated slot quantity is an aggregated slot quantity in transport block processing over multiple slots TBoMS; and the correspondence comprises a first correspondence between the repeated transmission quantity M and T aggregated slot quantities, or the correspondence comprises a correspondence between a plurality of first repeated transmission quantities and one aggregated slot quantity, wherein a sum of the plurality of first repeated transmission quantities is M, M is an integer greater than or equal to 1, and T is an integer greater than or equal to 1 and less than or equal to M; and
    receiving uplink transmission data, wherein the uplink transmission data is sent based on the correspondence.

4. The method according to claim 3, wherein before the sending first information, the method further comprises:

    sending second information, wherein a correspondence between a repeated transmission quantity and an aggregated slot quantity set is configured in the second information, the first information indicates a first correspondence between the repeated transmission quantity M and a first aggregated slot quantity set in the second information, and a quantity of non-repeated elements in the first aggregated slot quantity set is T; or
    a correspondence between a repeated transmission quantity and an aggregated slot quantity is configured in the second information, and the first information indicates a correspondence between each of the plurality of first repeated transmission quantities and the aggregated slot quantity in the second information.

5. The method according to any one of claims 1 to 4, wherein duration that is occupied by the uplink transmission and that is determined based on the correspondence is determined based on an uplink data transmission interval.

6. The method according to any one of claims 1 to 5, wherein the duration that is occupied by the uplink transmission and that is determined based on the correspondence is first duration, and the first duration is greater than 16 milliseconds.

7. The method according to any one of claim 6, wherein the first duration is 20 milliseconds.

8. The method according to any one of claims 1 to 7, wherein a maximum quantity of slots available to the uplink transmission is a first quantity of slots, a slot that is occupied by the uplink transmission and that is determined based on the correspondence is a second quantity of slots, and the second quantity of slots is less than or equal to the first quantity of slots.

9. The method according to claim 8, wherein the first quantity of slots is 32.

10. The method according to any one of claims 1 to 9, wherein a value of the aggregated slot quantity belongs to a first set, and the first set comprises 5.

11. The method according to any one of claims 1 to 10, wherein a value of M belongs to a second set, and the second set comprises 5 and/or 10.

12. The method according to claim 11, wherein T=1 when the second set comprises 5 and/or 10.

13. The method according to claim 10, wherein when a subcarrier spacing is 15 kHz, the first correspondence exists between the repeated transmission quantity M being 4 and the aggregated slot quantity being 5.

14. The method according to claim 11 or 12, wherein when a subcarrier spacing is 15 kHz, the first correspondence exists between the repeated transmission quantity M being 10 and the aggregated slot quantity being 2; and/or the first correspondence exists between the repeated transmission quantity M being 5 and the aggregated slot quantity being 4.

15. The method according to any one of claims 1 to 4, wherein the second information is radio resource control RRC signaling or a system information block SIB; and/or the first information is carried in downlink control information DCI or RRC signaling.

16. The method according to claim 1 or 3, wherein the first information is carried in RRC signaling, the RRC signaling comprises a first correspondence between the repeated transmission quantity M and an aggregated slot quantity set, and a quantity of non-repeated elements in the aggregated slot quantity set is T; or the RRC signaling comprises a correspondence between each of the plurality of first repeated transmission quantities and one aggregated slot quantity.

17. The method according to claim 1 or 3, wherein if the correspondence comprises the correspondence between the plurality of first repeated transmission quantities and one aggregated slot quantity, in the uplink transmission, a repeated transmission corresponding to each first repeated transmission quantity is independently encoded.

18. The method according to claim 1 or 3, wherein when T=M, M repeated transmissions are in one-to-one correspondence with the T aggregated slot quantities; and/or when 1<T<M, the T aggregated slot quantities cyclically correspond to the M repeated transmissions.

19. A communication apparatus, comprising a module configured to perform the method according to any one of claims 1, 2, and 5 to 18.

20. A communication apparatus, comprising a module configured to perform the method according to any one of claims 3, 4, and 5 to 18.

21. A communication apparatus, comprising a processor coupled to a memory, wherein the processor is configured to execute computer program instructions stored in the memory, to enable the apparatus to perform the method according to any one of claims 1, 2, and 5 to 18, or perform the method according to any one of claims 3, 4, and 5 to 18.

22. A communication apparatus, comprising a processor, wherein the processor is configured to implement, by executing computer instructions or by using a logic circuit, the method according to any one of claims 1, 2, and 5 to 18 or the method according to any one of claims 3, 4, and 5 to 18.

23. The communication apparatus according to claim 21, further comprising the memory, wherein the memory is configured to store the computer instructions.

24. The communication apparatus according to claim 21 or 22, further comprising a transceiver configured to receive a signal and/or send a signal.

25. A readable storage medium, configured to store instructions, wherein when the instructions are executed, the method according to any one of claims 1, 2, and 5 to 18 is implemented, or the method according to any one of claims 3, 4, and 5 to 18 is implemented.

26. A computer program product, wherein when a computer reads and executes the computer program product, the computer is enabled to perform the method according to any one of claims 1, 2, and 5 to 18 or claims 3, 4, and 5 to 18.

27. A communication system, comprising the communication apparatus according to claim 19 and the communication apparatus according to claim 20.

FIG. 1

FIG. 2

```
PUSCH-Allocation-r16 ::=   SEQUENCE {
    mappingType-r16                    ENUMERATED {typeA, typeB}                      OPTIONAL,    -- Cond NotFormat01-02-Or-TypeA
    startSymbolAndLength-r16           INTEGER (0..127)                               OPTIONAL,    -- Cond NotFormat01-02-Or-TypeA
    startSymbol-r16                    INTEGER (0..13)                                OPTIONAL,    -- Cond RepTypeB
    length-r16                         INTEGER (1..14)                                OPTIONAL,    -- Cond RepTypeB
    numberOfRepetitions-r16            ENUMERATED {n1, n2, n3, n4, n7, n8, n12, n16}  OPTIONAL,    -- Cond Format01-02
    ...,
    [[
    numberOfRepetitionsExt-r17         ENUMERATED {n1, n2, n3, n4, n7, n8, n12, n16, n20, n24, n28, n32, spare4, spare3, spare2,
                                                   spare1}                            OPTIONAL,    -- Cond Format01-02-For-TypeA
    numberOfSlots-TBoMS-r17            ENUMERATED {n1, n2, n4, n8, spare3, spare2, spare1}  OPTIONAL   -- Need M
    ]]
}
```

**FIG. 3A**

**FIG. 3B**

Network device

Terminal device

101: Send first information, where the first
information indicates a first correspondence
between a repeated transmission quantity M of an
uplink transmission to be performed by the terminal
device and T aggregated slot quantities

102: Receive the first
information

Perform the uplink transmission based on the first
correspondence indicated by the first information

FIG. 4A

| Rep1 | Rep2 | ... | Repi | ... | RepM |
|------|------|-----|------|-----|------|
| N1 | N2 | ... | Ni | ... | NM |

FIG. 4B

| Sequence number/<br>Index number | Repeated transmission<br>quantity M | Aggregated slot quantity set |
|:---:|:---:|:---:|
| 01 | 2 | {8, 8} |
| 02 | | {8, 8, 4} |
| 03 | 3 | {4, 8, 8} |
| 04 | | {8, 4, 8} |
| 05 | | {4, 4, 8, 8} |
| 06 | | {8, 8, 4, 4} |
| 07 | 4 | {4, 8, 4, 8} |
| 08 | | {8, 4, 8, 4} |
| 09 | | {2, 4, 8, 4, 2} |
| 10 | 5 | {2, 2, 8, 4, 4} |
| 11 | | {4, 2, 8, 4, 2} |
| | | ... |
| ... | 7 | {2, 4, 2, 4, 2, 4, 2}<br>{2, 4, 2, 4, 2, 4, 2}<br>... |
| ... | ... | ... |

FIG. 4C

| RV0 | RV2 | RV3 | RV1 | RV0 | RV2 | RV3 |
|------|------|------|------|------|------|------|
| Rep1 | Rep2 | Rep3 | Rep4 | Rep5 | Rep6 | Rep7 |
| 2 | 4 | 2 | 4 | 2 | 4 | 2 |

(a)

1st repeated
transmission
RV0
Mapped to two
consecutive slots

2nd repeated
transmission
RV2
Mapped to four
consecutive slots

3rd repeated
transmission
RV3
Mapped to two
consecutive slots

4th repeated
transmission
RV1
Mapped to four
consecutive slots

(b)

FIG. 4D

| RV0 | RV3 | RV0 | RV3 | RV0 | RV3 | RV0 |
|------|------|------|------|------|------|------|
| Rep1 | Rep2 | Rep3 | Rep4 | Rep5 | Rep6 | Rep7 |
| 2 | 4 | 2 | 4 | 2 | 4 | 2 |

(a)

1st/3rd repeated transmission

RV0 — — — — — — — — — — ► Mapped to two consecutive slots

2nd/4th repeated transmission

RV3 — — — — ► Mapped to four consecutive slots

RV2

RV1

(b)

FIG. 4E

Network device

Terminal device

201: Send first information, where the first information indicates a correspondence between a plurality of first repeated transmission quantities of an uplink transmission to be performed by a terminal device and one aggregated slot quantity, a sum of the plurality of first repeated transmission quantities is M, and M is an integer greater than 1

202: Receive the first information

Perform the uplink transmission based on the correspondence indicated by the first information

FIG. 5A

M1                   M2                   Mj

N1    N1    N2    N2    N2      ...      Nj    Nj

FIG. 5B

Independent encoding 1

Independent encoding 2

M1=4                M2=3

2    2    2    2    4    4    4

FIG. 5C

300

Communication apparatus

Transceiver module    301

Processing module    302

FIG. 6

900

Memory

113 (Memory #3)

111

Processor

113 (Memory #2)

Memory

112

Transceiver

Memory

113 (Memory #1)

FIG. 7

## INTERNATIONAL SEARCH REPORT

| International application No. |
|---|
| **PCT/CN2023/110064** |

| A. | CLASSIFICATION OF SUBJECT MATTER |
|---|---|

H04W 24/02(2009.01)i;  H04W 72/04(2023.01)i

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNABS, CNTXT, VEN, WPABS, USTXT, EPTXT, WOTXT, CNKI: 次数, 聚合, 多, 聚合时隙, 时隙, 重复, 重复传输次数, 对应, 映射, slot, TBoMS, aggregated, repetition, times, slot, map

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114765485 A (INTEL CORP.) 19 July 2022 (2022-07-19) description, paragraphs [0068]-[0170] | 1-27 |
| X | US 2022225388 A1 (LG ELECTRONICS INC.) 14 July 2022 (2022-07-14) claims 1-15, and description, paragraphs [0184]-[0321] | 1-27 |
| A | CN 114614875 A (SPREADSIGNAL SEMICONDUCTOR (NANJING) CO., LTD.) 10 June 2022 (2022-06-10) entire document | 1-27 |
| A | US 2021352712 A1 (QUALCOMM INC.) 11 November 2021 (2021-11-11) entire document | 1-27 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 October 2023** | **25 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/110064**

| Patent document cited in search report | | | Publication date (day/month/year) | Patent family member(s) | | | Publication date (day/month/year) |
|---|---|---|---|---|---|---|---|
| CN | 114765485 | A | 19 July 2022 | None | | | |
| US | 2022225388 | A1 | 14 July 2022 | WO | 2022154579 | A1 | 21 July 2022 |
| | | | | US | 2023047006 | A1 | 16 February 2023 |
| | | | | KR | 20220144839 | A | 27 October 2022 |
| | | | | KR | 102570633 | B1 | 25 August 2023 |
| | | | | JP | 2023529747 | A | 11 July 2023 |
| | | | | US | 11483856 | B2 | 25 October 2022 |
| | | | | EP | 4123954 | A1 | 25 January 2023 |
| CN | 114614875 | A | 10 June 2022 | WO | 2022121710 | A1 | 16 June 2022 |
| US | 2021352712 | A1 | 11 November 2021 | TW | 202147906 | A | 16 December 2021 |
| | | | | EP | 4147526 | A1 | 15 March 2023 |
| | | | | WO | 2021226360 | A1 | 11 November 2021 |

Form PCT/ISA/210 (patent family annex) (July 2022)

**REFERENCES CITED IN THE DESCRIPTION**

**Patent documents cited in the description**

- CN 202210957933